# EUROPÄISCHE PATENTSCHRIFT

(11) **EP 3 019 324 B1**
(45) Veröffentlichungstag und Bekanntmachung des Hinweises auf die Patenterteilung: **20.12.2017**
(21) Anmeldenummer: 14739103.1
(22) Anmeldetag: 08.07.2014
(51) Int. Cl.: B29B 7/42, B29C 47/76, B29B 7/00, B29B 7/84, B29C 47/40, B29C 47/00, B29K 9/00, B29K 21/00, B29K 33/00, B29K 55/02, B29K 69/00, B29K 77/00

(54) **VERFAHREN ZUR HERSTELLUNG VON THERMOPLASTISCHEN FORMMASSEN, SOWIE DANACH HERGESTELLTE THERMOPLASTISCHE FORMMASSEN**
METHOD FOR PRODUCING THERMOPLASTIC MOLDING COMPOUNDS, AND THERMOPLASTIC MOLDING COMPOUNDS SO PRODUCED
PROCÉDÉ POUR PRODUIRE DES MATIÈRES À MOULER THERMOPLASTIQUES, ET MATIÈRES À MOULER THERMOPLASTIQUES AINSI PRODUITES

(30) Priorität: 11.07.2013 EP 13176178
(43) Veröffentlichungstag der Anmeldung: 18.05.2016
(73) Patentinhaber: INEOS Styrolution Group GmbH, 60325 Frankfurt am Main (DE)
(72) Erfinder: FISCHER, Wolfgang, 69190 Walldorf (DE); NIESSNER, Norbert, 67159 Friedelsheim (DE)
(74) Vertreter: Jacobi, Markus Alexander
(86) Internationale Anmeldenummer: PCT/EP2014/064555
(87) Internationale Veröffentlichungsnummer: WO 2015/004112

(56) Entgegenhaltungen:
- EP-A1- 0 534 235
- EP-A1- 0 734 825
- EP-A1- 0 734 826
- EP-A1- 0 735 077
- EP-A1- 0 735 078
- EP-A1- 1 400 337
- EP-A1- 2 584 001
- DE-A1- 19 547 975
- DE-A1-102008 009 735
- US-A- 6 165 399

## Beschreibung

Die vorliegende Erfindung betrifft ein Verfahren zur Herstellung und zum Extrudieren von thermoplastischen Zusammensetzungen beziehungsweise Formmassen, welches gegenüber dem Stand der Technik eine deutlich geringere Materialschädigung erlaubt. Das Verfahren dient der Herstellung von thermoplastischen Formmassen in einer Schneckenmaschine unter mechanischer Entwässerung. Weiterhin betrifft die Erfindung schlagzäh-modifizierte thermoplastische Formmassen beziehungsweise PolymerBlends, die schlagzäh-modifizierte Thermoplaste enthalten, welche mit dem erfindungsgemäßen Verfahren hergestellt wurden.
Die Entgasung und Entwässerung von Thermoplasten mittels Schneckenmaschinen ist bekannt. So beschreibt EP-A 0735077 ein Verfahren zur Herstellung von schlagzäh-modifizierten Thermoplasten durch mechanische Entwässerung einer elastomeren Komponente und Vermischen mit einem thermoplastischen Polymer in einer Schneckenmaschine. Die Entwässerungsöffnungen sind mit Rückhalteschnecken versehen und werden unter Überdruck betrieben. Eine Metalldrahtgewebe-Verbundplatte zur Rückhaltung der extrudierten Masse an den Entwässerungs- oder Entlüftungsöffnungen wird dabei nicht eingesetzt.
In der JP S02-286208 (1990) werden drei unterschiedliche Entwässerungsverfahren mittels eines Extruders, der mit zwei Schnecken bestückt ist, offenbart. Der Extrusions-Masse wird jeweils Feuchtigkeit in flüssiger Form und zusätzlich gasförmig über Seiher-Gehäuse entzogen. Die Druckschrift JP H 57-167303 (1982) beschreibt, dass eine Extrusions-Masse, in diesem Falle zum Beispiel Ausschlämmungen von Polymerteilchen, in einen Zweischneckenextruder dosiert, entwässert, entgast und geknetet wird. Flussaufwärts von der Kompressionszone kann Wasser in flüssiger Form aus dem Extruder austreten. Restfeuchte kann gasförmig entweichen. Als Entwässerungsöffnungen werden Seiher-Gehäuse verwendet.
Die JP H 60-222223 (1985) offenbart ein Verfahren, bei dem einem Extrusionsgut, bevorzugt einem Lebensmittel aber auch anderen Materialien, Wasser in flüssiger Form entzogen wird. Die Entwässerung erfolgt mittels eines Zweischneckenextruders. Der Austrag der Feuchtigkeit erfolgt rückwärts durch eine Öffnung, die an eine Vakuumpumpe angeschlossen ist.

In der WO 98/13412 werden Schneckenmaschinen beschrieben, die mindestens einen Abquetsch-Abschnitt mit mindestens einem Stauelement und einer zugehörigen Entwässerungsöffnung stromaufwärts vor dem ersten Stauelement aufweisen. Darüber hinaus enthalten die Schneckenmaschinen Entgasungsabschnitte, die nach dem letzten Plastifizierungs-Abschnitt liegen. Die Entgasungs-und Entwässerungsöffnungen können mit einer Vorrichtung versehen sein, die das Austreten von Extrusionsgut verhindert. Rückhalteschnecken werden als für diesen Zweck bevorzugt beschrieben. Weiter wird beschreiben, dass sich Seiher-Gehäuse oder Siebe nicht dazu eignen, Entwässerungsöffnungen abzudecken, da Seiher-Gehäuse zu schnell verstopfen. Siebe haben darüber hinaus den Nachteil, mechanisch instabil zu sein. Entgasungsöffnungen werden gemäß der WO 98/13412 bevorzugt nicht abgedeckt.

Die DE 10 2008 009735 A1 offenbart eine Vorrichtung zum Extrudieren von Formmassen, jedoch wird keine thermoplastische Formmasse beschrieben, weiche mindestens ein Kautschuk-modifiziertes Styrol-Acrylnitril(SAN)-Copolymer enthält, mit mindestens einem Acrylester-Styrol-Acrylnitril (ASA) Kautschuk mit einer bimodalen Teilchengrößenverteilung und einer mittleren Teilchengröße von 80 nm bis 600 nm, bevorzugt von 200 nm bis 600 nm, sowie einer SAN-Matrix mit einem AN-Gehalt von 25 Gew.-% bis 35 Gew.-%, bevorzugt 27 Gew.-% bis 33 Gew.-%.

Siebe oder Filter werden in Extrusionsvorrichtungen dazu verwendet, die Schmelze zu reinigen. Beispielsweise war aus US 5,055,244, EP-A1 229 346 und EP-A2 728 510 bekannt, das Extrusionsgut vor dem Spritzgießen zu Reinigungszwecken durch einen Filter zu pressen. Aus der DE-A1 41 23 122 war des Weiteren bekannt, dass eine mit einem Panzersieb mit einer Durchlässigkeit von 40 µ abgedeckte Extrusionsöffnung zur Herstellung extrem dünner Fäden verwendet werden kann.

Eine Spritzgussmaschine zum Entgasen hygroskopischer Spritzmaterialien ist in der DE-A 42 37 174 beschrieben. Die Schnecke läuft in einem Zylinder, dessen Wand mehrlagig aufgebaut ist. Die innere Wand ist aus einem Sintermetall ausgebildet. Dieses ist für den Feuchtigkeitsdampf durchlässig. Der Dampf, der das Sintermetall passiert hat, wird über Kanäle, die sich in der Zylinderwand befinden, abtransportiert. Der Zylinder ist mit einer äußeren Wand als Hülle umgeben.

Aus der CH-A 512 979 geht eine Extrusionsvorrichtung für Kunststoffe hervor, die auch dem Entwässern der zu behandelnden Materialien dienen kann und die auf einem ähnlichen Prinzip beruht. Das Gehäuse weist eine Sintermetallauskleidung auf. Diese kann aus aneinandergereihten Sintermetallringen bestehen. Jeder dieser Sintermetallringe weist außen einen Ringkanal auf, der zum Abtransport des durch den Sinterring getretenen Gases evakuiert werden kann. Diese Konstruktion hat den Nachteil, sehr aufwendig zu sein.

Rückhalteschnecken verhindern sehr effektiv das Austreten des Extrusionsgutes durch die Entgasungs- bzw. Entwässerungsöffnungen, erfordern aber einen hohen Investitionsaufwand. Da sie bewegliche Teile sind, müssen sie regelmäßig gewartet werden. Auch halten sie meist sehr feinteilige Produktpartikel nicht vollständig zurück.

Sogenannte "Seiher-Gehäuse" sind mit Flächen aus Lamellenpaketen ausgestattet, die das Extrusionsgut zurückhalten sollen, den Wasserdampf beziehungsweise das Wasser aber durch lange enge Schlitze einer Breite von im Allgemeinen 0,1 mm bis 1 mm durchlassen. Sie halten das Extrusionsgut zurück, lassen aber feine Feststoffpartikel zu einem hohem Anteil durch oder verstopfen leicht und müssen daher häufig gereinigt werden. Außerdem müssen die feinen durchgelassenen Partikel regelmäßig entfernt werden, da von sehr feinen Partikeln eine Brandgefahr ausgehen kann.

Innenzylinder von Extrusionsmaschinen aus durchlässigem Material, entweder durchgängig oder in Form von Sinterringen zu fertigen, ist zum einen technisch aufwendig. Zum anderen müssen die Maschinen für die Reinigung komplett abgestellt, die Schnecke gezogen und die Maschine weiter demontiert werden. Oft halten auch derartige technische Anordnungen dem in der Vorrichtung auftretenden Drucken nicht hinreichend gut Stand.

Nach dem Stand der Technik war es nicht bevorzugt, Entgasungs- oder Entwässerungsöffnungen mit herkömmlichen Sieben abzudecken, da diese relativ schnell verstopfen und den mechanischen Beanspruchungen nicht hinreichend gewachsen sind.

Die EP-A 1400337 beschreibt eine Vorrichtung der oben genannten Art, die die genannten Nachteile nicht aufweist. Insbesondere wurde eine Vorrichtung gefunden, mittels der weniger als 1 g Feinpartikel pro kg des an der jeweiligen Öffnung vorbeigeführten Extrusionsguts durch die Entgasungsöffnungen austretenden Gase ausgetragen wird.

Ferner soll die Vorrichtung, mittels derer das Austreten von Extrusionsgut aus den Entgasungsöffnungen verhindert wird, eine hohe mechanische Festigkeit haben, soll leicht zu reinigen sein und soll geringe Investitionskosten erfordern. Demgemäß wird eine Vorrichtung zum Extrudieren von thermoplastischen Formmassen beschrieben, die mindestens eine Entgasungsöffnung umfasst, worin die Entgasungsöffnung mit einer Metalldrahtgewebe-Verbundplatte (MV), einem Feinlochblech oder einer Schlitzlochblende ausgerüstet ist. 5-lagige Metallsiebverbundplatten zeigen Vorteile gegenüber Seihergehäusen und Stopfschnecken.

Die oben genannten Dokumente weisen nicht darauf hin, ob und gegebenenfalls wie durch das Verfahren die Produkteigenschaften der extrudierten Kunststoffe - insbesondere bei ABS (Acrylnitril-Butadien-Styrolcopolymer) - und ASA (Acrylester-Styrol-Acrylnitril-Copolymer) -Formmassen - verbessert werden können. Insbesondere wird ein hoher Gehalt an Abbauprodukten bei der Extrusion nicht adressiert.

Daher ist es Aufgabe der vorliegenden Erfindung, kritische Eigenschaften und Fahrparameter eines Extruders so zu erarbeiten, dass bei gleichem Durchsatz, das heißt gleicher Wirtschaftlichkeit, die Abbauprodukte minimiert werden.
Der Stand der Technik EP-A 1400337 weist darauf hin, dass der ungewollte Austrag von extrudiertem Gut, wie zum Beispiel Kautschuk ("Krümelflug") durch eine 5-lagige Metalldrahtgewebe-Verbundplatte (MV) minimiert werden kann. Eine Drehzahl (DZ) bleibt hier im Vergleich zu herkömmlichen Technologien, wie Seiher-Gehäusen und Rückhalteschnecken mit 300 U/min bei einem Außendurchmesser (Ds) der Schnecke von 58 mm unverändert.

Die vorliegende Erfindung weist darauf hin, dass die Extruder-Drehzahlen (DZ) bei Verwendung einer 5-lagigen Metalldrahtgewebe-Verbundplatte (MV) um mehr als 10%, bevorzugt mehr als 20% und besonders bevorzugt mehr als 30 % unter oben genannten Drehzahl eines Extruders mit konventioneller Technik liegen kann, um, trotz höherer Verweildauer im Extruder, die Abbaureaktionen im Produkt zu reduzieren, wobei gleichzeitig der Druck und die Entwässerungsleistung in einer Abquetschphase beziehungsweise Abquetschzone ansteigen. Der Gehalt an Abbauprodukten, wie beispielsweise 1-Buten, und/oder der Gehalt an Restmonomeren, wie beispielsweise Styrol, kann als Maß für eine schonende Verarbeitung der thermoplastischen Formmasse dienen.
Als Thermoplaste können verschiedene hochmolekulare oder oligomere Verbindungen verwendet werden, die bei Erhöhung der Temperatur, nach Überschreiten ihrer Glasübergangstemperatur weich werden. Hierunter können Kunststoffe, aber auch Naturprodukte und Pharmaka fallen. In einer Ausführungsform enthält die thermoplastische Formmasse mindestens ein schlagzäh-modifiziertes Copolymer oder einen schlagzäh-modifizierten Copolymer-Blend, sowie gegebenenfalls weitere Komponenten. Verschiedene thermoplastische Kunststoffe sind dem Fachmann seit Jahren bekannt. Beispielhaft werden genannt: Polyamide, Polycarbonate, Styrolpolymere, Styrol-Copolymere oder Mischungen dieser Polymere. Zu den Styrol-Copolymeren zählen zum Beispiel Styrol/Acrylnitril-Copolymere (SAN), kautschukmodifizierte Styrol-Copolymere, wie Acrylnitril/Butadien/Styrolcopolymere (ABS), Acrylnitril/Acrylat/Styrolcopolymere (ASA).

Die thermoplastische Formmasse enthält mindestens ein Kautschuk-modifiziertes Styrol-Acrylnitril-Copolymer, wobei die Kautschuk-Komponente auf einem Acrylester-Styrol-Acrylnitril-Copolymer (ASA) basiert.

Die thermoplastische Formmasse enthält mindestens ein Kautschuk-modifiziertes Styrol-Acrylnitril(SAN)-Copolymer mit mindestens einem Acrylester-Styrol-Acrylnitril (ASA) Kautschuk mit einer bimodalen Teilchengrößenverteilung und einer mittleren Teilchengröße von 80 nm bis 600 nm, oftmals auch 200 nm bis 600 nm, sowie einer SAN-Matrix mit einem AN-Gehalt von 25 Gew.-% bis 35 Gew.-%, bevorzugt 27 Gew.-% bis 33 Gew.-%.

Daneben kommen auch Derivate oder Varianten von SAN-Polymeren, ABS oder ASA in Betracht, wie solche auf der Basis von alpha-Methylstyrol oder Methacrylat oder solche, die weitere Co-Monomere umfassen, beispielsweise das sogenannte Methylmethacrylat-Acrylnitril-Butadien-Styrol (MABS). Es können auch Mischungen von zwei oder mehreren unterschiedlichen Styrol-Copolymeren eingesetzt werden. Des Weiteren kommen kautschukmodifizierte Styrol-Copolymere in Betracht, die ganz oder teilweise auf anderen Kautschuken basieren, wie Ethylen-Butadien-Kautschuken oder Silikonkautschuken.

Bevorzugt werden auch Mischungen ("Blends") der genannten Polymere mit Polyamiden, Polybutylenterephthalaten und/oder Polycarbonaten. Weitere Thermoplaste werden unten im Einzelnen aufgeführt.

Bei dem erfindungsgemäßen Verfahren zur Herstellung von thermoplastischen Formmassen wird ein Extruder eingesetzt, welcher, in Förderrichtung (stromabwärts) aufgebaut ist aus:
a) mindestens einem Dosierabschnitt (DA), wobei dieser Dosierabschnitt (DA) vorzugsweise mindestens eine Entwässerungsöffnung umfasst, die mit einer Metalldrahtgewebe-Verbundplatte (MV), einem Feinlochblech oder einer Schützlochblende ausgerüstet ist,
b) mindestens einem der Entwässerung der thermoplastischen Formmasse dienenden Abquetsch-Abschnitt (Q), der mindestens ein Stauelement, sowie jeweils mindestens eine zugehörige Entwässerungsöffnung enthält, wobei diese mindestens eine Entwässerungsöffnung mit einer Metalldrahtgewebe-Verbundplatte (MV), einem Feinlochblech oder einer Schlitzlochblende ausgerüstet ist,
c) mindestens einem Zuführabschnitt (Z),
d) mindestens einem, mit Durchmischungs-, Knet- und/oder anderen PlastifizierungsElementen versehenen Plastifizierungs-Abschnitt (P),
e) mindestens einem, mit mindestens einer Entgasungsöffnung versehenen Entgasungsabschnitt (E), wobei mindestens eine der Entgasungsöffnungen vorzugsweise mit einer Metalldrahtgewebe-Verbundplatte (MV), einem Feinlochblech oder einer Schlitzlochblende ausgerüstet ist, und
f) einer Austragszone (AT),
wobei bei dem Verfahren im Abquetsch-Abschnitt (Q) ein Schneckenextruder (S) eingesetzt wird, in dem der Außendurchmesser (Ds) mindestens einer Schnecke von 30 mm bis 230 mm, insbesondere von 60 mm bis 220 mm beträgt, und
wobei eine Drehzahl (DZ) der mindestens einen Schnecke des Extruders von 60 bis 270, insbesondere von 60 bis 210 U/min beträgt, und wobei
der eingesetzte Schneckenextruder (S) mindestens eine Entgasungsöffnung und/oder Entwässerungsöffnung aufweist, wobei in der Entwässerungsöffnung mindestens eine Metalldrahtgewebe-Verbundplatte (MV) befestigt ist, mit zwei oder mehreren Lagen, wobei sich auf einer grob gewebten, großmaschigen aber mechanisch stabilen Trägerschicht (erste Lage) mindestens eine engmaschigere Lage befindet, wobei sich die engmaschigste Lage auf einer produktzugewandten Seiten befindet, wobei
in den Dosierabschnitt (DA) mittels einer Dosiereinrichtung eine Wasser- und/oder eine andere verdampfbare Flüssigkeit enthaltende thermoplastische Formmasse dem Extruder zugeführt wird, welche
mindestens ein Kautschuk-modifiziertes Styrol-Acrylnitril(SAN)-Copolymer enthält, mit mindestens einem Acrylester-Styrol-Acrylnitril (ASA) Kautschuk mit einer bimodalen Teilchengrößenverteilung und einer mittleren Teilchengröße von 80 nm bis 600 nm, bevorzugt von 200 nm bis 600 nm, sowie einer SAN-Matrix mit einem AN-Gehalt von 25 Gew.-% bis 35 Gew.-%, bevorzugt 27 Gew.-% bis 33 Gew.-%, und
in dem Zuführabschnitt (Z) weitere Komponenten der thermoplastischen Formmasse als Schmelze in den Extruder eingeführt werden, und
in dem Entgasungsabschnitt (E) aus der thermoplastischen Formmasse weiteres Wasser beziehungsweise Flüssigkeiten als Dampf entfernt werden, und
in der Austragszone (AT) die thermoplastische Formmasse aus dem Extruder ausgetragen wird.

Als Vorrichtung zur Durchführung des erfindungsgemäßen Verfahrens ist an sich jede Schneckenmaschine geeignet, die mindestens eine Entwässerungsöffnung umfasst und mittels derer thermoplastische Formmassen extrudiert werden können. Hierunter sollen auch Schneckenmaschinen verstanden werden, die in der Verarbeitung wie dem Spritzguss eingesetzt werden. Schneckenmaschinen sind an sich bekannt, so dass hier auf die allgemein zugängliche Literatur verwiesen werden kann. So können beispielsweise Schneckenmaschinen eingesetzt werden, wie sie aus den oben genannten Dokumenten bekannt sind. Im Allgemeinen umfassen Schneckenmaschinen mindestens einen Dosierabschnitt (DA), mindestens einen Plastifizierungs-Abschnitt (P) und eine Austragszone (AT).

Im Allgemeinen richtet sich die Anzahl, Anordnung und Ausgestaltung der Entwässerungsöffnungen nach der Menge des Gases, das die Schneckenmaschine verlassen soll. Beispielsweise richtet sich die Anzahl, Anordnung und Geometrie der Entwässerungsöffnungen bei der Extrusion Wasser enthaltender thermoplastischer Formmassen nach dem Wassergehalt der thermoplastischen Formmasse und dem gewünschten Restwassergehalt des Endproduktes.

Erfindungsgemäß weisen die Schneckenmaschinen mindestens eine Entwässerungsöffnung auf. Sie können aber auch mehrere Entwässerungsöffnungen aufweisen. Beispielsweise können sie zwei oder drei Entwässerungsöffnungen umfassen. Es ist aber auch möglich, dass die Schneckenmaschinen sehr viel mehr, beispielsweise bis zu 30, Entwässerungsöffnungen aufweisen.

Die Entwässerungsöffnungen können sich an der Oberseite des Gehäuses der Schneckenmaschine befinden. Sie können aber auch eine seitliche oder nach unten weisende Anordnung haben. Auch ist es zum Beispiel möglich die Entwässerungsöffnungen paarweise gegenüberliegend seitlich oder paarweise oben und unten liegend anzuordnen. Ferner kann eine Kombination der genannten Anordnungen in Betracht kommen. Beispielsweise kann die Entwässerungsöffnung jeweils einzeln nebeneinanderliegend oder übereinanderliegend angeordnet sein. Es kommt jedoch auch in Betracht, dass mehrere Entwässerungsöffnungen nebeneinander liegend oder übereinanderliegend angeordnet sind.

Die Anzahl und die Position der Entwässerungsöffnungen richten sich nach den jeweiligen Aufgaben. In der Regel erfolgt die Entwässerung mit der Förderrichtung stromabwärts von der Dosierzone beziehungsweise der Dosierzone und der Aufschmelzzone, das heißt vorwärts. Die Entwässerung kann aber auch entgegen der Förderrichtung stromaufwärts, das heißt rückwärts zur Dosierzone erfolgen. Im einfachsten Fall liegt nur eine Entwässerungsöffnung vor, die stromauf oder stromab einer Dosierzone angeordnet sein kann. Falls es mehrere Dosierzonen gibt, kann die Entwässerung stromauf oder stromab zu jeder dieser Dosierzonen erfolgen.

Die Entwässerungsöffnungen können in an sich bekannter Weise ausgestaltet sein und in ihrer Geometrie bekannten Öffnungen entsprechen, wie sie üblicherweise zum Entfernen gasförmiger Stoffe aus einem Extruder verwendet werden. So können Entwässerungsöffnungen verwendet werden, die Aussparungen und/oder Bohrungen im Extruderzylinder (Extrudergehäuse) sind. Als Entwässerungsöffnungen sind beispielsweise kreisförmige Bohrungen oder Bohrungen im Form einer liegenden Acht (also zwei direkt nebeneinanderliegende kreisförmige Bohrungen) geeignet, wobei die Längsachse der liegenden Acht beispielsweise rechtwinklig (quer) oder parallel (längs) zur Förderrichtung des Extruders angeordnet sein kann.

Eine andere bevorzugte Ausgestaltung der Entwässerungsöffnungen ist rechteckig, quadratisch oder oval, seitlich, oben oder unten. Dabei können die quadratischen oder rechteckigen Öffnungen mit abgerundeten Ecken ausgeführt sein. Sofern mehr als eine Entwässerungsöffnung verwendet wird, ist es auch möglich, dass deren Geometrie unterschiedlich ist.

Besonders bevorzugt sind die rechteckigen oder ovalen Entwässerungsöffnungen so angeordnet, dass deren längere Seite parallel zur Achse des Extruders liegt. Im Fall, dass die Entwässerungsöffnungen oben oder unten liegen, reichen die Öffnungen gemäß einer Ausführungsform über alle Schnecken, beispielsweise über beide Schnecken einer Zweischneckenmaschine, so dass beide Schnecken sichtbar wären. Es ist aber auch möglich, dass eine der Schnecken, ganz oder teilweise abgedeckt ist, so dass nur eine Seite entwässert wird. Alternativ kann die Entwässerungsöffnung so angeordnet sein, dass sie nicht eng anliegt, so dass zwar alle Schnecken entwässert werden, aber die Ableitung des Wassers nur über die nicht abgedeckte Schnecke geschieht. Sofern die Druckverhältnisse dies zulassen kann die Entwässerungsöffnung auch zylindrisch rundumlaufend angeordnet sein.

Erfindungsgemäß ist bevorzugt mindestens eine Entwässerungsöffnung mit einer Metalldrahtgewebe-Verbundplatte (MV), einem Feinlochblech und/oder einer Schlitzlochblende ausgerüstet. Darunter ist die MV besonders bevorzugt.

In einer bevorzugten Ausführungsform beträgt der Druck im Schneckenextruder, im Bereich der Metalldrahtgewebe-Verbundplatten (MV), von 10 bar bis 55 bar, insbesondere von 15 bar bis 35 bar. Der Druck wird durch die üblichen Druckmessgeräte geprüft; die Prüfung kann auf direkte Messung des mechanischen Drucks beruhen oder auf Messung des Drucks auf eine Membran, ein Piezoelement, einem Sensor oder weiteren, üblichen Bauelementen, wie sie vom Fachmann in der technischen Druckprüfung eingesetzt werden.

Die Enwässerungsöffnungen können unter Normaldruck, unter Vakuum oder unter Überdruck betrieben werden, wobei alle Entwässerungsöffnungen gleichen oder unterschiedlichen Druck aufweisen können. Durch entsprechenden Druckaufbau oder Vakuum kann der Feuchtegehalt des Extrusionsgutes an dieser Stelle in gewissen Grenzen eingestellt werden. Im Falle eines Vakuums beträgt der absolute Druck üblicherweise 2 mbar bis 900 mbar, bevorzugt 10 mbar bis 800 mbar, besonders bevorzugt 30 mbar bis 500 mbar; bei einer Entgasung unter Überdruck wird in der Regel 1,1 bar bis 20 bar absoluter Druck eingestellt. Bevorzugt ist es jedoch, die Entgasungsabschnitte unter Normaldruck oder unter Vakuum zu betreiben.

Die Vorrichtung weist mindestens eine Entwässerungsöffnung auf, die mit einer Metalldrahtgewebe-Verbundplatte (MV), einem Feinlochblech und/oder einer Schlitzlochblende ausgerüstet. In einer Ausführungsform sind alle Entwässerungsöffnungen auf diese Weise ausgerüstet.

Nach einer anderen bevorzugten Ausführungsform sind einige Entwässerungsöffnungen so ausgerüstet und die restlichen Entwässerungsöffnungen entweder offen oder mit anderen Vorrichtungen versehen, die das Austreten des Fördergutes verhindern. Als solche kann z.B. eine Rückhalteschnecke dienen. So kann die Entwässerungsöffnung oder die Entwässerungsöffnungen, an denen die Flüssigkeitsaustrittgeschwindigkeit am größten ist, jeweils mit einer MV, einem Feinlochblech oder einer Schlitzlochblende ausgerüstet sein, während die Entwässerungsöffnung oder die Entwässerungsöffnungen, an denen nur wenig Fördergut austritt, offen sein können. Auch kann es vorteilhaft sein, die Entwässerungsöffnungen, bei denen verfahrensbedingt hohe Drücke auftreten können, mit einer MV, einem Feinlochblech oder einer Schlitzlochblende auszustatten, wobei die jeweilige der genannten Vorrichtungen austrittsseitig mit einer Druckhaltung versehen ist.

Die MV, das Feinlochblech oder die Schlitzlochblende ist vorzugsweise in seiner Geometrie derjenigen der Entwässerungsöffnung angepasst. So kann sie kreisförmig sein, die Form einer liegenden Acht aufweisen, rechteckig, quadratisch oder oval sein.

Die MV, das Feinlochblech oder die Schlitzlochblende können auf unterschiedlichste Weise in der Entwässerungsöffnung befestigt sein. Bevorzugt wird die jeweilige der genannten Vorrichtungen in einen stabilen Rahmen eingeschweißt, eingelötet oder eingepresst. Der Rahmen kann dann in entsprechende Aussparungen eines Verdrängers in der Entwässerungsöffnung eingeklemmt, eingesteckt oder eingeschraubt werden. Auch die klappbare Anbringung ist möglich, wobei eine Seite des Rahmens mit einem fest angebrachten Scharnier oder einer vergleichbaren Vorrichtung versehen ist. Eine variable Anbringung, beispielsweise klappbar, steckbar, schraubbar, klick-in, mittels eines Bajonettverschlusses hat den Vorteil, dass entsprechend vorgefertigte Rahmen schnell gewechselt werden können. Hierdurch wird die Reinigung, Wartung oder Inspektion erleichtert, aber auch eine Maschinenanpassung aufgrund von zum Beispiel Produktwechsel.

Die MV, das Feinlochblech oder die Schlitzlochblende können in der Entwässerungsöffnung derart angebracht sein, dass eine Oberfläche plan mit der Innenwand des Extruderzylinders (Extrudergehäuses) abschließt. Im Allgemeinen ragt die Oberfläche des MV, Feinlochbleches oder der Schlitzlochblende nicht mehr als das Spiel zwischen Schnecke und Wand in das Extruder-Innere hinein. Dadurch wird verhindert, dass weder die Schnecke noch die MV, das Fein- lochblech oder die Schlitzlochblende beschädigt werden. Weiterer Vorteil einer solchen Ausgestaltung ist, dass Ablagerungen vor der MV, dem Feinlochblech oder der Schlitzlochblende oder ständiges Ankleben von Extrusionsgut verhindert wird.

Nach einer anderen Ausführungsform kann es zweckmäßig sein, die MV, das Feinlochblech oder die Schlitzlochblende etwas zurückversetzt von der Schnecke anzubringen. Hierdurch wird der mechanische Kontakt zwischen Schnecke und MV, Feinlochblech oder Schlitzlochblende vermieden. Allerdings kann es bei dieser Art der Anbringung erforderlich sein, Vorsorge dafür zu treffen, dass sich keine Ablagerungen von Resten von Extrusionsgut in den vorhandenen Totvolumina bilden. Eine zurückversetzte Anbringung kann dann besonders vorteilhaft sein, wenn z.B. die Entwässerungsöffnung oben liegt und insbesondere sich im Dosierbereich befindet und pulverförmiges Extrusionsgut vorliegt. Wenn diesem ein gewisses Volumen bei der Entwässerung gewährt wird, kann es in den Schneckengang zurückfallen.

Sofern die Oberfläche der MV, des Feinlochbleches oder der Schlitzlochblende plan mit der Innenseite des Extrudergehäuses ist, hat sie vorzugsweise dieselbe Wölbung wie der Extruderzylinder. Es ist aber auch möglich, dass die Oberfläche des MV, des Feinlochbleches oder der Schlitzlochblende eine andere Wölbung aufweist.
So kann es günstig sein, dass die Oberfläche nach innen oder außen gewölbt ist oder gänzlich eben ist. Nach einer besonders bevorzugten Ausführungsform ist sie der Schnecke entsprechend gewölbt, so dass die Schnecke der Wölbung der Oberfläche folgend, diese regelmäßig abkämmen kann. Bei der Position der Entwässerungsöffnung im Zwickelbereich von zwei Schnecken kann es beispielsweise vorteilhaft oder notwendig sein, die Form der Oberfläche derart anzupassen, dass sie einer der Länge nach durchgeschnittenen liegenden Acht entspricht.

In einer bevorzugten Ausführungsform weist die MV 2 bis 30 Lagen, insbesondere 3 bis 15 Lagen auf.

Die MV kann ein Drahtgewebe aufweisen, das zum Beispiel glatt ist oder Leinenbindung aufweist. Es ist möglich, dass das Drahtgewebe quadratische Maschenform hat oder Körperbindung aufweist. Es kann sich aber auch um Tressengewebe mit glatter oder Leinenbindung, eine Körpertresse oder Panzertresse handeln. Mechanisch sehr stabil und daher bevorzugt sind mehrlagig aufgebaute Drahtgewebe aus zwei oder drei oder mehr, beispielsweise bis zu 30 Lagen, bevorzugt 2 bis 10 Lagen. Bevorzugt werden dabei MV, die eine grob gewebte, großmaschige aber mechanisch stabile Trägerschicht (Stützgewebe) haben und darauf aufbauend immer enger-maschigere und feiner gewebte Zwischen- und Filterschichten aufweisen. In einer bevorzugten Ausführungsform beträgt die mittlere Maschenweite der engmaschigsten Lage der Metalldrahtgewebe-Verbundplatte (MV) von 1 µm bis 500 µm, bevorzugt 10 µm bis 200 µm, besonders bevorzugt 50 µm bis 100 µm und insbesondere 75 µm.

Die Maschenweiten für das feinste beziehungsweise engmaschigste Gewebe können beispielsweise von 1 µm bis 500 µm, bevorzugt 10 µm bis 200 µm, besonders bevorzugt 50 µm bis 100 µm und insbesondere 75 µm betragen.

Im Allgemeinen liegen die Maschenweiten der Trägerschicht deutlich darüber und können bis mehrere Millimeter betragen. Geringere Maschenweiten für das feinste Gewebe sind ebenfalls möglich, beispielsweise, wenn besonders feine Partikel zurückgehalten werden sollen. Es ist auch möglich, dass die Web-Art für einige Lagen gleich ist und sich dann ändert oder sich von Lage zu Lage ändert. Web-Art und die Anzahl der Lagen richten sich nach der jeweiligen Aufgabe, insbesondere nach der benötigten mechanischen Festigkeit, den Druckverhältnissen oder der Trennaufgabe.

Um die mechanische Festigkeit der MV zu erhöhen, können die einzelnen Drahtgewebe miteinander versintert sein. Diese Ausführungsform ist bevorzugt. MV sind an sich bekannt und werden beispielsweise im Handel für Schmelze-Filtrations-Zwecke oder als Anströmboden für Wirbelschichtreaktoren angeboten. Sie können aber auch aus an sich bekannten Teilen gefertigt werden.

Die erfindungsgemäß einsetzbaren Feinlochblenden sind fein gelochte Bleche mit Lochweiten von beispielsweise 0,06 mm bis 4 mm.

Sie können auch mit einem Drahtgewebe der oben angegebenen Art kombiniert sein, wobei das Feinlochblech im Allgemeinen als Trägermaterial und das Drahtgewebe als Filtermaterial dient. Umgekehrt ist es aber auch möglich ein grobes Drahtgewebe als Träger und ein sehr fein gelochtes Blech als Filterschicht zu verwenden. Feinlochblenden sind an sich bekannt und im Stand der Technik für Siebzentrifugen oder Schleudern eingesetzt.

Schlitzlochblenden, die erfindungsgemäß verwendet werden können, weisen schlitzförmig verlaufende Öffnungen auf und unterscheiden sich von Seihergehäusen insbesondere dadurch, dass sie keine durchgehenden Schlitze aufweisen sondern eine Vielzahl diskreter Öffnungen. Dabei können die Öffnungen prinzipiell in jedem Winkel in Bezug auf die Schneckenachse angeordnet sein, beispielsweise parallel zur Achse der Schnecke verlaufen. Die Öffnungen können aber auch eine andere Verlaufsrichtung in Bezug auf die Achse der Schnecke, bzw. der Schnecken, aufweisen. Nach einer der bevorzugten Ausführungsformen verlaufen die Öffnungen der Schlitzlochblende quer zur Achse der Schnecke, insbesondere ist ihre Verlaufsrichtung 90° in Bezug auf die Achse der Schnecke bzw. den Schnecken. Die Öffnungen können einheitlich groß sein. Ihre Größe kann aber auch variieren.

Das Längenverhältnis der längeren bzw. kürzeren Achse der Öffnungen kann beispielsweise im Bereich von 60 : 1 bis 2 : 1, bevorzugt 50 : 1 bis 4 : 1 betragen. Die kürzere der Achsen der Öffnungen kann z.B. von 0,05 bis 0,1 mm, bevorzugt 0,05 bis 0,09 mm lang sein. Die kürzere der Achsen der Öffnungen kann bei mehrlagigen Schlitzlochblenden auch länger sein, beispielsweise bis zu 0,5 mm lang sein, wobei Schlitzlochblenden mit diesen größeren Öffnungen, die Lage oder die Lagen mit den größeren Öffnungen bevorzugt auf der von dem Fördergut abgewandten Seite aufweisen. Derartige Schlitzlochblenden sind an sich bekannt und werden im Stand der Technik in Siebschleudern, Zentrifugen oder Wirbelschichttrocknern eingesetzt.

Die Werkstoffe aus denen MV, Feinlochblende oder Schlitzlochblende gefertigt sind, richten sich nach dem Anwendungszweck. In der Regel handelt es sich um verzinkte oder verzinnt unlegierte Stähle, NiC (-Kohlenstoff) -Stähle, Cr-Stähle, nichtrostende Stähle wie martensitische oder austenitische Stähle der Werkstoffgruppen 1.43 (CrNi-Stähle) oder 1.44 (CrNiMo-Stähle). Es kommen aber auch hochhitzebeständige Stähle in Betracht sowie solche aus Kupfer-, Nickel-, Titan- oder Aluminiumlegierungen. Für die Extrusion von Naturstoffen für den Lebensmittelsektor oder für Extrusionen im Arzneimittelbereich, kann es erforderlich sein, Edelmetall wie Silber zu verwenden. Es ist auch möglich, dass polierte, insbesondere glatte bis spiegelglatte metallische Materialien eingesetzt werden. Auch sind metallische Oberflächen denkbar, die den sogenannten Lotuseffekt aufweisen. Für Ausnahmefälle im Niedrigtemperaturbereich können auch Kunststoffe zur Anwendung kommen. Die meisten Anwendungen können mit den Werkstoffgruppen 1.40 bis 1.45 abgedeckt werden, worunter Chrom-Nickel-Molybdän-Stähle am häufigsten eingesetzt werden.

Mittels des Einsatzes von MV, Feinlochblende oder Schlitzlochblende werden feine Feststoffpartikel sehr wirksam zurückgehalten, so dass nach außen im Wesentlichen nur Gas, zum Beispiel Wasserdampf, oder Flüssigkeit austritt. Die MV, das Feinlochblech oder die Sieblochblende können einfach durch Rückspülen, abbürsten oder ausglühen gereinigt werden, da im Allgemeinen im Wesentlichen keine Tiefenbeladung innerhalb der Gewebeschichten auftritt. In einer bevorzugten Ausführungsform ist der Schneckenextruder (S) mit mindestens zwei gleichsinnig oder gegensinnig rotierenden Schnecken mit einem Außendurchmesser (Ds) von 30 mm bis 230 mm, insbesondere von 60 mm bis 220 mm, ausgerüstet.
Nach einer besonders bevorzugten Ausführungsform ist die Vorrichtung zur Durchführung des erfindungsgemäßen Verfahrens ein Extruder mit mindestens zwei gleichsinnig oder gegensinnig rotierenden Schnecken, wobei der Extruder in Förderrichtung (stromabwärts) im Wesentlichen aus - mindestens einem Dosierabschnitt (DA), in den mittels einer Dosiereinrichtung eine Wasser enthaltende thermoplastische Formmasse dem Extruder zugeführt wird, - mindestens einem der Entwässerung der thermoplastischen Formmasse dienenden Abquetschabschnitt (Q), der mindestens ein Stauelement, sowie jeweils mindestens eine zugehörige Entwässerungsöffnung enthält, die mit einer MV, einem Feinlochblech oder einer Schlitzlochblende ausgerüstet ist, - mindestens einem Zuführabschnitt (Z), in dem weitere Komponenten der thermoplastischen Formmasse als Schmelze in den Extruder eingeführt wird, - mindestens einem mit Durchmischungs-, Knet- und/oder anderen Plastifizierungselementen versehenen Plastifizierungs-Abschnitt (P), - mindestens einem mit mindestens einer Entgasungsöffnung versehenen Entgasungsabschnitt (E), in dem aus der thermoplastischen Formmasse weiteres Wasser als Dampf entfernt wird, wobei oftmals mindestens eine der Entgasungsöffnungen mit einer MV, einem Feinlochblech oder einer Schlitzlochblende ausgerüstet ist und - einer Austragszone (AT).
Die Vorrichtung zur Durchführung des erfindungsgemäßen Verfahrens kann dazu eingesetzt werden, um eine thermoplastische Formmasse zu extrudieren, die entgast und dabei entwässert werden kann. Es ist auch möglich eine Mischung aus Wasser und einer thermoplastischen Formmasse, zum Beispiel eine Aufschlämmung von thermoplastische Formmasse in Wasser, der Vorrichtung zuzuführen und zu extrudieren. In diesem Fall beträgt der Wassergehalt der thermoplastischen Formmasse beispielsweise bis zu 90 Gew.-%. Ebenso ist es möglich eine Mischung unterschiedlicher thermoplastischer Formmassen zu extrudieren. Erfindungsgemäß kann die Vorrichtung auch dazu dienen, eine thermoplastische Formmasse aus einer wasserfeuchten, bis zu 60 Gew. -% Restwasser enthaltenden Komponente herzustellen, indem man diese Komponente der Vorrichtung zuführt, zumindest teilweise entwässert mit weiteren Komponenten vermischt und anschließend die thermoplastische Formmasse austrägt. So werden bevorzugt schlagzäh-modifizierte thermoplastische Formmassen oder schlagzäh-modifizierte Thermoplaste enthaltende Polymerblends hergestellt.

In einer bevorzugten Ausführungsform umfasst mindestens ein Schritt des erfindungsgemäßen Verfahrens eine Entgasung und/oder eine mechanische Entwässerung, wobei das austretende Wasser teilweise oder vollständig in flüssiger Phase abgeführt wird. In der Regel liegt die Wassertemperatur an der Austrittsöffnung bei 40 °C bis 130 °C, bevorzugt bei 50 °C bis 99°C, unter Druck aber auch höher.

In einer weiteren bevorzugten Ausführungsform wird die thermoplastische Formmasse aus einer wasserfeuchten, bis zu 90 Gew.-% Restwasser enthaltenden thermoplastischen Formmasse hergestellt und letztere gegebenenfalls mit den weiteren Komponenten unter Entgasung und Entwässerung vermischt und anschließend die thermoplastische Formmasse aus dem Extruder ausgetragen.

In einem ersten Abquetsch-Abschnitt werden, abhängig von einer Elastomerkomponente der thermoplastischen Formmasse und dem anfangs vorhandenen Restwassergehalt, üblicherweise 10 Gew.-% bis 90 Gew.-%, bevorzugt 20 Gew.-% bis 80 Gew.-% des anfänglich enthaltenen Restwassers entfernt.

In einer bevorzugten Ausführungsform wird der Extruder in den Dosierabschnitten und in den Abquetschabschnitten nicht beheizt. In einer Ausführungsform wird der Extruder in diesen genannten Abschnitten gekühlt.

In einer für die Herstellung mancher schlagzäher thermoplastischer Formmassen bevorzugten Ausführungsform folgt auf den soeben beschriebenen ersten Abquetschabschnitt ein zweiter Abquetschabschnitt, der wiederum aus einem fördernden Abschnitt und einer als Hindernis wirksamen Stauzone besteht. Hinsichtlich dieses Abschnittes gelten im wesentlichen die gleichen Ausführungen wie zum ersten Abquetschabschnitt, insbesondere auch zur Art der eingesetzten MV, Feinlochblech oder Schlitzlochblende.

Im fakultativen zweiten Abquetschabschnitt wird die Elastomerkomponente weiter entwässert, wobei nochmals bis zu 80 Gew.-%, bevorzugt bis zu 65 Gew.-% des anfänglich (vor der Extrusion) enthaltenen Wassers entfernt werden. Durch die von der rotierenden Extruderschnecke eingebrachte mechanische Energie steigt die Temperatur der Elastomerkomponente im zweiten Abquetschabschnitt im allgemeinen auf Werte bis 250°C an.

Bevorzugt wird das Verfahren derart ausgestaltet, dass der Extruderinhalt möglichst niedrigen Temperaturen ausgesetzt ist. Bevorzugt wird daher der Extruder derart ausgestaltet und betrieben, dass die Temperatur der Elastomerkomponente 200°C, besonders bevorzugt 180°C nicht überschreitet. Die genannten Temperaturen beziehen sich auf die Stauzonen.

Das in dem zweiten Abquetschabschnitt entfernte Wasser tritt zu 20 Gew.-% bis 99 Gew.-% als Flüssigkeit aus, die an 100 Gew.-% fehlende Menge als Dampf. Bevorzugt werden die Entwässerungsöffnungen jedoch so ausgestaltet, dass der Anteil des flüssig austretenden Wassers trotz der hohen Materialtemperatur 70 Gew.-% oder mehr beträgt. Hierzu werden die Geometrien der Extruderschnecken und gegebenenfalls der Rückhalteschnecken derart gestaltet, dass, beispielsweise durch Druckaufbau im Austrittsbereich oder durch andere Maßnahmen, das Wasser überwiegend flüssig bleibt. In diesem Abquetschabschnitt können die Entwässerungsöffnungen erfindungsgemäß auch mit einer MV, einem Feinlochblech oder einer Schlitzlochblende ausgerüstet. Eine gegebenenfalls benötigte Druckhaltung wird im Allgemeinen außerhalb der MV, dem Feinlochblech oder der Schlitzlochblende in den Ableitungen erfolgen.

Die teilentwässerte Elastomerkomponente kann am Ende des zweiten Abquetsch-Abschnittes bereits in größerem Umfange angeschmolzen oder aufgeschmolzen sein und in Form größerer zusammengeschmolzener Agglomerate vorliegen.

Der Extruder kann hinter dem zweiten Abquetsch-Abschnitt weitere Abquetsch-Abschnitte enthalten, insbesondere dann, wenn der anfängliche Restwassergehalt der Elastomerkomponente hoch ist.

Nach einer bevorzugten Ausführungsform kann die Vorrichtung zur Durchführung des erfindungsgemäßen Verfahrens zur Herstellung von schlagzäh-modifizierten thermoplastischen Formmassen oder schlagzäh-modifizierte Thermoplaste enthaltende Polymerblends eingesetzt werden, durch Vermischen mindestens einer wasserfeuchten bis zu 90 Gew.%, bevorzugt bis zu 60 Gew.-% Restwasser enthaltenden Elastomerkomponente A mit mindestens einem thermoplastischen Polymeren B sowie weiteren Polymeren C und Zusatzstoffen D in einer Schneckenmaschine unter mechanischer Entwässerung der Elastomerkomponente A.

In einer bevorzugten Ausführungsform beträgt der Außendurchmesser (Ds) mindestens einer Schnecke des Schneckenextruders (S) zwischen 80 mm und 180 mm und die Drehzahl (DZ) der mindestens einen Schnecke des Schneckenextruders (S) zwischen 100 200 U/min und 200 U/min.
In EP-A 1 400 337 ist ein Verfahrensprinzip zum Extrudieren von Thermoplasten näher erläutert. Allerdings ist der in oben genanntem Dokument genannte bevorzugte Drehzahlbereich von 100 min-1 bis 700 min-1 mit vorteilhaften Schergeschwindigkeiten von 35 s-1 bis 260 s-1 nicht geeignet, optimale Verarbeitungsbedingungen einzustellen.
Als Elastomerkomponente A kann im Allgemeinen jedes Polymere eingesetzt werden, das elastomere Eigenschaften hat und einem Extruder zugeführt werden kann. Es kann auch eine Mischung verschiedener Elastomerkomponenten A eingesetzt werden.

Insbesondere werden als Elastomerkomponente A partikelförmige Kautschuke verwendet. Besonders bevorzugt sind solche Kautschuke, die eine aufgepfropfte Hülle aus anderen, in der Regel nicht elastomeren Polymeren aufweisen. Die dem Extruder als teilentwässertes Material zugeführten Pfropfkautschuk-Typen enthalten in einer bevorzugten Ausführungsform der Erfindung bis zu 50 Gew. -%, besonders bevorzugt 25 Gew. -% bis 40 Gew. -% Restwasser.
Beschrieben wird ein Verfahren, bei dem als Elastomerkomponente A zwei- oder mehrstufig aufgebaute Pfropfkautschuke verwendet werden, bei denen die elastomeren Grund-oder Pfropfstufen durch Polymerisation eines oder mehrerer der Monomeren Butadien, Isopren, Chloropren ; Styrol, Alkylstyrol, C1-bis C12-Alkylester der Acrylsäure oder der Methacrylsäure sowie geringer Mengen anderer, auch vernetzender Monomeren erhalten werden, und bei denen die harten Pfropfstufen aus einem oder mehreren der Monomeren Styrol, Alkylstyrol, Acrylnitril, Methylmethacrylat polymerisiert werden.
Beschrieben sind Pfropfpartikel A aus Polymeren auf Basis von Butadien/Styrol/Acrylnitril, n-Butylacrylat/Styrol/Acrylnitril, Butadien/n-Butylacrylat/Styrol/Acrylnitril, n-Butylacrylat/ Methylmethacrylat, n-Butylacrylat/Styrol/Methylmethacrylat, Butadien/Styrol/ Acrylnitril/Methylmethacrylat und Butadien/n-Butylacrylat/ Methylmethacrylat/Styrol/ Acrylnitril. In Kern oder Schale können bis zu 10 Gew.-% funktionelle Gruppen tragende, polare Monomere oder auch vernetzend wirkende Monomere, einpolymerisiert sein.

Als thermoplastische Polymere B werden Styrol-Acrylnitril- (SAN)-Copolymere, Polystyrol, Polymethylmethacrylat, Polyvinylchlorid oder Mischungen dieser Polymere beschrieben.

Dabei sind SAN-Polymere, Polymethylmethacrylat (PMMA) oder Mischungen dieser Polymere beschrieben. Weiterhin können als thermoplastische Polymere B auch Polycarbonate, Polyalkylenterephthalate wie Polybutylenterephthalat und Polyethylenterephthalat, Polyoxymethylen, Polymethylmethacrylat, Polyphenylensulfid, Polysulfone, Polyethersulfone und Polyamide, und Mischungen dieser Thermoplasten, eingesetzt werden. Ausserdem können auch thermoplastische Elastomere wie thermoplastisches Polyurethan (TPU) als Polymeres B verwendet werden.

Ebenso kann man als Komponente B Copolymere auf Basis von Styrol/ Maleinsäureanhydrid, Styrol/imidiertem Maleinsäureanhydrid, Styrol/Maleinsäureanhydrid/ imidiertem Maleinsäureanhydrid, Styrol/ Methylmethacrylat/imidiertem Maleinsäureanhydrid, Styrol/Methylmethacrylat, Styrol/Methylmethacrylat/Maleinsäureanhydrid, Methylmethacrylat/imidiertem Maleinsäureanhydrid, Styrol/imidiertem Methylmethacrylat, imidiertem PMMA oder Mischungen dieser Polymere verwenden.

Bei allen genannten thermoplastischen Polymeren B kann das Styrol im Allgemeinen ganz oder teilweise durch alpha-Methylstyrol, oder durch kernalkylierte Styrole, oder durch Acrylnitril ersetzt sein. Von den zuletzt genannten Polymeren B sind solche auf Basis von alpha-Methylstyrol/Acrylnitril, Styrol/Maleinsäureanhydrid, Styrol/ Methylmethacrylat und Copolymere mit imidiertem Maleinsäureanhydrid beschrieben.

Bekannte Beispiele für die Elastomerkomponente A sind Polymere von konjugierten Dienen wie Butadien, mit einer äusseren Pfropfhülle auf Basis einer vinylaromatischen Verbindung, wie etwa SAN-Copolymeren. Gleichfalls bekannt sind Pfropfkautschuke auf Basis von vernetzten Polymerisaten aus C1-bis C12-Alkylestern der Acrylsäure wie n-Butylacrylat, Ethylhexylacrylat, gepfropft mit Polymeren auf der Grundlage vinylaromatischer Verbindungen wie SAN-Copolymeren. Gebräuchlich sind auch Pfropfkautschuke, die im Wesentlichen ein Copolymerisat aus konjugierten Dienen und C1-bis C12-Alkylacrylaten, beispielsweise ein Butadien-n-Butylacrylat-Copolymerisat, und eine äußere Pfropfstufe aus SAN-Copolymer, Polystyrol oder PMMA enthalten. Die Herstellung solcher Pfropfkautschuke nach den üblichen Verfahren, insbesondere durch Emulsions-oder Suspensionspolymerisation, ist bekannt.

Pfropfkautschuke auf Basis von SAN-gepfropftem Polybutadien sind beispielsweise in den Schriften DE 24 27 960 und EP-A 258 741 beschrieben, solche auf Basis von SAN-gepfropftem Poly-n-Butylacrylat in DE-AS 12 60 135 und DE-OS 31 49 358. Näheres zu SAN-gepfropften Poly(Butadien/n-Butylacrylat) -Mischkautschuken ist der EP-A 62 901 zu entnehmen.

Als thermoplastische Polymere B werden im Falle der im letzten Absatz genannten Pfropfkautschuke Copolymere aus Styrol und Acrylnitril verwendet. Sie sind bekannt und zum Teil auch handelsüblich und haben in der Regel eine Viskositätszahl VZ (ermittelt nach DIN 53 726 bei 25 °C, 0,5 Gew.-% in Dimethylformamid) von 40 ml/g bis 160 ml/g, entsprechend einer mittleren Molmasse Mw von etwa 40000 g/mol bis 2000000 g/mol.

Bevorzugt werden die thermoplastischen Polymeren B durch kontinuierliche Substanz- oder Lösungspolymerisation hergestellt, wobei die erhaltene Schmelze, gegebenenfalls nach Entfernung der Lösungsmittel, beispielsweise mit einer Schmelzepumpe kontinuierlich direkt dem Extruder zugeführt wird. Jedoch ist auch eine Herstellung durch Emulsions-, Suspensions- oder Fällungspolymerisation möglich, wobei in einem zusätzlichen Arbeitsschritt das Polymere von der flüssigen Phase getrennt wird. Einzelheiten der Herstellungsverfahren sind z.B. im Kunststoffhandbuch, Hrg. R. Vieweg und G. Daumiller, Bd. V"Polystyrol", Carl-Hanser-Verlag, München, 1969, S. 118 bis S. 124 beschrieben.

Ist die Elastomerkomponente A ein SAN-gepfropftes Polybutadien, so entsteht durch Einarbeiten des SAN eine Formmasse, die als ABS (Acrylnitril/Butadien/Styrol) bekannt ist. Wird als Elastomerenkomponente A ein SAN-gepfropftes Alkylacrylat verwendet, so entstehen sogenannte ASA-Formmassen (Acrylnitril/Styrol/Acrylat).

Weiterhin wird beschrieben, dass Pfropfkautschuke mit bis zu 60 Gew.-% Restwassergehalt auf Basis von Polydienen und/oder Polyalkyl-acrylaten sowie SAN und/oder PMMA eingesetzt werden, die aus mehr als zwei Pfropfstufen aufgebaut sind. Beispiele für solche vielstufigen Pfropfpartikel sind Teilchen, die als Kern ein Polydien und/oder Polyalkylacrylat, als erste Hülle ein Polystyrol oder SAN-Polymeres und als zweite Hülle ein anderes SAN-Polymeres mit einem veränderten Gewichtsverhältnis Styrol : Acrylnitril enthalten, oder auch Teilchen aus einem Polystyrol-, Polymethylmethacrylat- oder SAN-Polymerisat-Kern, einer ersten Hülle aus Polydien und/oder Polyalkylacrylat und einer zweiten Hülle aus Polystyrol, Polymethylmethacrylat oder SAN-Polymer. Weitere Beispiele sind Pfropfkautschuke aus einem Polydienkern, einer oder mehreren Polyalkylacrylathüllen und einer oder mehreren Polymer-Hüllen aus Polystyrol, Polymethylmethacrylat oder SAN-Polymer oder analog aufgebaute Pfropfkautschuke mit Acrylatkern und Polydienhüllen.

Ferner sind Copolymerisate mit mehrstufigem Kern-Schale-Aufbau aus vernetztem Alkylacrylat, Styrol, Methylmethacrylat und einer äusseren Schale aus PMMA gebräuchlich. Solche mehrstufigen Pfropfkautschuke sind z.B. in DE-OS 31 49 046 beschrieben. Pfropfkautschuke auf Basis von n-Butylacrylat/Styrol/Methylmethacrylat mit einer Hülle aus PMMA werden z.B. in EP-A 512 333 beschrieben, wobei auch jeder andere dem Stand der Technik entsprechende Aufbau solcher Pfropfkautschuke möglich ist. Derartige Kautschuke werden als schlagzäh machende Komponente für Polyvinylchlorid und bevorzugt für schlagzähes PMMA eingesetzt.

Als thermoplastische Polymere B können wiederum die genannten SAN-Copolymere und/oder PMMA verwendet werden. Ist die Elastomerkomponente A ein mehrschalig aufgebautes Kern/ Schale-Polymer auf Basis n-Butylacrylat/Methylmethacrylat, und das Polymere B PMMA, so erhält man demnach schlagzähes PMMA.

Der Durchmesser der partikelförmigen Pfropfkautschuke beträgt 0,05 bis 20 micrometer. Handelt es sich um die allgemein bekannten Pfropfkautschuke kleinen Durchmessers, so beträgt er bevorzugt 80 nm bis 600 nm und besonders bevorzugt 100 nm bis 600 nm.

Bei den zweckmäßigerweise mittels Suspensionspolymerisation hergestellten großteiligen Pfropfkautschuken ist der Durchmesser bevorzugt 1,8 micrometer bis 18 micrometer und insbesondere 2 micrometer bis 15 micrometer. Derartige Pfropfkautschuke großen Durchmessers lehrt beispielsweise die DE-OS 44 43 886. Bevorzugte Komponente B sind auch in dieser Ausführungsform die genannten SAN-Copolymere, Polystyrol und/oder PMMA.

Bei der Komponente C handelt es sich um weitere Polymere, insbesondere um thermoplastische Polymere. Für die Komponente C kommen alle Polymere in Betracht, die für das thermoplastische Polymere B genannt wurden. In der Regel unterscheiden sich die Polymeren B und C durch die verwendeten Monomeren.

Sind die Monomeren, aus denen die Polymere B und C aufgebaut sind, identisch, so unterscheiden sich die Komponenten B und C in der Regel durch die Mengenanteile der Monomere-beispielsweise können die Polymere B und C Styrol-Acrylnitril-Copolymere sein, die sich im Styrol : Acrylnitril-Verhältnis unterscheiden. Falls auch die Mengenanteile der Monomeren identisch sind, unterscheiden sich die Polymere B und C durch ihre verschiedenen mittleren Molmassen Mw (B) und Mw (C), messbar beispielsweise, als verschiedene Viskositätszahlen VZ (B) und VZ (C).

Als Monomere zur Herstellung von C können neben den für die Komponente B unter anderem genannten Monomeren Styrol, Acrylnitril, Methylmethacrylat und Vinylchlorid auch folgende andere Verbindungen als wesentliche Bestandteile verwendet werden : - a-Methylstyrol und C1 bis C8-kernalkylierte Styrole bzw. a-Methylstyrole, - Methacrylnitril, - C1 bis C12-Alkylester der Acrylsäure und der Methacrylsäure - Maleinsäure, Maleinsäureanhydrid, sowie Maleinsäureimide - Vinylether, Vinylformamid.

Beispielhaft seien für die Komponente C Polymere auf Basis a-Methylstyrol/Acrylnitril und Methylmethacrylat/Alkylacrylat, sowie Copolymere aus Alkylestern der Acrylsäure oder der Methacrylsäure und Styrol bzw. Acrylnitril bzw. Styrol und Acrylnitril genannt.

Weitere bevorzugte Polymere C sind - Styrol-Acrylnitril-Copolymere mit von der Komponente B abweichenden Mengenanteilen der Monomeren, oder verschiedenen mittleren Molmassen Mw. Die Bestimmung von Mw erfolgt nach gängigen Methoden.

Copolymere aus a-Methylstyrol und Acrylnitril, - Polymethylmethacrylate, - Polycarbonate, Polybutylenterephthalat und Polyethylenterephthalat, - Polyamide, - Copolymere aus mindestens zwei der Monomeren Styrol, Methylmethacrylat, Maleinsäureanhydrid, Acrylnitril und Maleinimiden, beispielsweise Copolymere aus Styrol, Maleinsäureanhydrid und Phenylmaleinimid, mittels Massepolymerisation oder Lösungspolymerisation hergestelltes ABS, - thermoplastische Polyurethane (TPU). Die Herstellung dieser Polymere ist dem Fachmann bekannt, weshalb nachfolgend nur kurz darauf eingegangen wird.

Unter Polymethylmethacrylaten sind insbesondere Polymethylmethacrylat (PMMA) sowie Copolymere auf der Basis von Methylmethacrylat mit bis zu 40 Gew. -% weiterer copolymerisierbarer Monomerer zu verstehen, wie sie beispielsweise unter der Bezeichnung Plexiglas von Evonik erhältlich sind. Nur beispielhaft sei ein Copolymeres aus 98 Gew.-% Methylmethacrylat und 2 Gew.-% Methylacrylat als Comonomer (Plexiglas 8N, Fa. Evonik) genannt. Ebenso geeignet ist ein Copolymeres aus Methylmethacrylat mit Styrol und Maleinsäure- anhydrid als Comonomeren (Plexiglas HW55, Fa. Evonik).

Geeignete Polycarbonate sind an sich bekannt. Sie sind z.B. entsprechend den Verfahren der DE-B-1 300 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyphenyl)propan, im Allgemeinen als Bisphenol A bezeichnet. Anstelle von Bisphenol A können auch andere aromatische Dihydroxyverbindungen verwendet werden, insbesondere 2,2-Di(4-hydroxyphenyl)pentan, 2,6-Dihydroxynapthalin, 4,4'-Dihydroxydiphenylsulfon, 4,4'-Dihydroxydiphenylether, 4,4'-Dihydroxydiphenylsulfit, 4,4'-dihydroxydiphenyl-methan, 1,1-Di-(4-hydroxyphenyl)ethan oder 4,4-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 mol.-% der vorstehend genannten aromatischen Dihydroxyverbindungen. Polycarbonate sind beispielsweise unter den Handelsnamen Makrolon (Fa. Bayer), Lexan (Fa. SABIC IP), Panlite (Fa. Tejin) oder Calibre (Fa. Dow) erhältlich. Die relative Viskosität dieser Polycarbonate liegt im Allgemeinen im Bereich von 1,1 bis 1,5, insbesondere 1,28 bis 1,4 (gemessen bei 25 °C in einer 0,5 gew.-% igen Lösung in Dichlormethan).

Polybutylenterephthalat und Polyethylenterephthalat werden in der Regel in an sich bekannter Weise durch Kondensation von Terephthalsäure bzw. deren Estern mit Butandiol bzw. Ethandiol unter Katalyse hergestellt. Dabei wird die Kondensation vorteilhaft zweistufig (Vorkondensation und Polykondensation) durchgeführt. Einzelheiten sind etwa Ullmann's Encyclopädie der Technischen Chemie, 4. Auflage, Band 19, S. 61-88 zu entnehmen. Polybutylenterephthalat ist beispielsweise als Ultradur (Fa. BASF) im Handel erhältlich.

Bevorzugte Polyamide sind ganz allgemein solche mit aliphatischem teilkristallinen oder teilaromatischem sowie amorphem Aufbau jeglicher Art und deren Blends. Entsprechende Produkte sind z.B. unter dem Handelsnamen Ultramid (Fa. BASF) erhältlich. Thermoplastische Polyurethane werden üblicherweise hergestellt durch Umsetzung von organischen, vorzugsweise aromatischen Diisocyanaten wie etwa 4,4'-Diphenylmethandiisocyanat, mit Polyhydroxylverbindungen, die vorzugsweise im Wesentlichen linear sind, etwa Polyetherole, oder Polyesterole wie Polyalkylenglycolpolyadipate, und als Kettenverlängerungsmittel wirkenden Diolen wie Butan-1,4-diol, in Gegenwart von Katalysatoren wie etwa tertiären Aminen (wie Triethylamin) oder organischen Metallverbindungen. Dabei beträgt das Verhältnis NCO-Gruppen der Diisocyanate zur Summe der OH-Gruppen (aus den Polyhydroxylverbindungen und den kettenverlängernden Diolen) bevorzugt etwa 1 zu 1.

Bevorzugt erfolgt die Herstellung der TPU nach dem sogenannten Bandverfahren, bei dem die genannten Komponenten und der Katalysator mittels eines Mischkopfes kontinuierlich gemischt und die Reaktionsmischung auf ein Förderband aufgebracht wird. Das Band durchläuft eine auf 60 °C bis 200 °C temperierte Zone, wobei die Mischung ausreagiert und erstarrt. Einzelheiten zu den TPU sind zum Beispiel der EP-A 443 432 zu entnehmen. TPU sind beispielsweise unter dem Handelsnamen Elastollane (Fa. Elastogran) erhältlich.

Weiterhin kann die Komponente C im Wesentlichen aus Copolymeren von C2-bis C9-Alkenen wie Ethylen, Propen und Buten mit - Vinylaromaten, - polaren Comonomeren wie Acrylsäure und Methacrylsäure, den C1-bis C12-Alkylestern der Acrylsäure und der Methacrylsäure, - anderen mono-oder polyfunktionellen ethylenisch ungesättigten Säuren wie Maleinsäure, Maleinsäureanhydrid, Fumarsäure, Itaconsäure sowie deren Estern, insbesondere Glycidylestern, Estern mit C1 bis C9-Alkanolen und Estern mit arylsubstituierten C1 bis C9-Alkanolen, - Kohlenstoffmonoxid, - nichtaromatischen Vinylverbindungen wie Vinylacetat, Vinylpropionat und Vinylalkylethern, -basischen Monomeren wie Hydroxyethylacrylat, Dimethylamino ethylacrylat, Vinylcarbazol, Vinylanilin, Vinylcaprolactam, Vinylpyrrolidon, Vinylimidazol und Vinylformamid, - Acrylnitril, Methacrylnitril bestehen, die in allgemein bekannter Weise hergestellt werden.

In einer bevorzugten Ausführungsform wird ein Polymeres C verwendet, das aus 40 Gew.-% bis 75 Gew.-% Ethylen, 5 Gew.-% bis 20 Gew.-% Kohlenstoffmonoxid und 20 Gew. -% bis 40 Gew. -% n-Butylacrylat herstellbar ist (als Elvaloy E HP-4051 (Fa. Du-Pont) im Handel erhältlich), oder ein Polymeres, das aus 50 Gew. -% bis 98,9 Gew. -% Ethylen, 1 Gew. -% bis 45 Gew.-% n-Butylacrylat und 0,1 Gew. -% bis 20 Gew.-% einer oder mehreren Verbindungen ausgewählt aus der Gruppe Acrylsäure, Methacrylsäure und Maleinsäureanhydrid, herstellbar ist. Die Herstellung der letztgenannten Ausführungsformen erfolgt üblicherweise durch radikalische Polymerisation und ist in den Schriften US 2 897 183 und US 5 057 593 beschrieben.

Außerdem sind Copolymere aus Butadien oder substituierten Butadienen mit Styrol, Methylmethacrylat oder Acrylnitril geeignet, beispielsweise Nitrilkautschuk (NBR) oder Styrol-Butadien- Kautschuk (SBR). Die olefinischen Doppelbindungen in diesen Copolymeren können ganz oder teilweise hydriert sein.

Ebenso sind als Komponente C gegebenenfalls hydrierte oder teilweise hydrierte, Copolymere aus Butadien und Styrol mit Blockstrukturen geeignet. Sie werden bevorzugt nach der Methode der anionischen Polymerisation in Lösung unter Verwendung metallorganischer Verbindungen wie sek. -Butyllithium hergestellt, wobei lineare Blockkautschuke beispielsweise des Aufbaus Styrol/Butadien (Zweiblock) oder Styrol/Butadien/Styrol (Dreiblock) entstehen.

Diese Blöcke können von Polymeren mit statistischer Verteilung voneinander getrennt sein, und ferner können die Blöcke auch in untergeordneten Mengen Einheiten des jeweils anderen Monomeren enthalten.

Bei Mitverwendung geringer Mengen eines Ethers, insbesondere Tetrahydrofuran (THF) neben dem Initiator, entstehen Polymerketten, welche, von einem Butadienreichen Ausgangssegment ausgehend, entlang der Kette einen steigenden Styrolgehalt aufweisen und schließlich in einem Homo-Polystyrol-Endsegment enden. Einzelheiten des Herstellungsverfahrens sind in der DE-A 31 06 959 beschrieben. Auch derart aufgebaute, gegebenenfalls hydrierte oder teilweise hydrierte, Polymere C sind gut geeignet.

Ebenfalls gut geeignet als Komponente C sind Polymere mit sternförmiger Struktur, die man durch Verknüpfung mehrerer Polymerketten, hauptsächlich von Dreiblockpolymerisaten des Typs Styrol/ Butadien/Styrol, über polyfunktionelle Moleküle erhält. Geeignete Verknüpfungsmittel sind zum Beispiel Polyepoxide, beispielsweise epoxidiertes Leinsamenöl, Polyisocyanate wie Benzo-1, 2,4-triisocyanat, Polyketone wie 1,3,6-Hexantrion und Polyanhydride, außerdem Dicarbonsäureester wie Diethyladipat, sowie Siliciumhalogenide wie SiC14, Metallhalogenide wie TiC14 und Polyvinylaromaten wie Divinylbenzole. Näheres über die Herstellung dieser Polymeren ist zum Beispiel der DE-A 26 10 068 zu entnehmen.

Neben der Elastomerkomponente A und den Polymeren B und C können die nach dem erfindungsgemäßen Verfahren hergestellten thermoplastischen Formmassen als weitere Komponente D Zusatzstoffe, beispielsweise Wachse, Weichmacher, Gleit- und Entformungsmittel, Pigmente, Farbstoffe, Mattierungsmittel, Flammschutzmittel, Antioxidantien, Stabilisatoren gegen Lichteinwirkung und thermische Schädigung, faser- und pulverförmige Füll- und Verstärkungsmittel und Antistatika in den für diese Mittel üblichen Mengen enthalten.

Die Zusatzstoffe D können in reiner Form fest, flüssig oder gasförmig vorliegen, oder bereits als Gemisch der reinen Stoffe miteinander eingesetzt werden. Sie können ebenso in einer Formulierung eingesetzt werden, welche die Dosierung erleichtert, etwa als Lösung, oder als Dispersion (Emulsion oder Suspension). Auch eine Formulierung als Masterbatch, d. h. als konzentrierte Mischung mit einem mit dem Extruderinhalt verträglichen thermoplastischen Polymeren, ist geeignet und in manchen Fällen bevorzugt.

Die Polymeren C und die Zusatzstoffe D können in einem oder mehreren der genannten Extruderabschnitte dem Extruder zugeführt werden. In einer bevorzugten Ausführungsform werden die Komponenten C und D-getrennt von der Elastomerkomponente A und dem thermoplastischen Polymeren B-im Entlüftungsabschnitt (E), im Dosierabschnitt (DA), und/oder im Zuführabschnitt (Z), in dem das Polymere B dem Extruder zugeführt wird, in den Extruder eingeführt. In einer weiteren bevorzugten Ausführungsform werden die Komponenten C und/oder D in der Austragszone (AT) dem Extruder zugeführt.

Die Bestandteile C und D können in den bzw. die gleichen Abschnitte oder jeweils in verschiedene Extruderabschnitte eindosiert werden, und man kann sowohl C als auch D zu 100 % in einem Abschnitt oder verteilt auf mehrere Abschnitte dem Extruder zuführen.

Die genaue Ausgestaltung der Zufuhr von C und D hängt ab von den erwähnten physikalischen und chemischen Eigenschaften der Komponenten A bis D und deren Mengenverhältnissen. So können beispielsweise Zusatzstoffe D mit geringer thermischer Beständigkeit erst in der Austragszone (AT) dem Extruder zugeführt werden, wodurch ein thermischer Abbau der Stoffe D weitgehend verhindert wird.

Die mit dem Verfahren hergestellten thermoplastischen Formmassen können mit den allgemein üblichen Verfahren zu Formkörpern verarbeitet werden. Beispielhaft seien Extrusion (für Rohre, Profile, Fasern, Folien und Platten), Spritzgießen (für Formteile aller Art) sowie Kalandrieren und Walzen (für Platten und Folien) genannt.

Ein wesentlicher Vorteil der des erfindungsgemäßen Verfahrens ist, dass im wesentlichen keine Feinpartikel aus dem Extruder über die Entgasungsöffnungen und/oder Entwässerungsöffnungen austreten.

Weiterhin ist die erfindungsgemäße Vorrichtung technisch erheblich einfacher als die bekannten Vorrichtungen. Gegenüber den aus dem Stand der Technik bekannten Vorrichtungen haben die erfindungsmäßen Verfahren weiterhin den Vorteil, dass sie sich wesentlich leichter handhaben lässt, so dass Reinigung und Wechsel sehr schnell erfolgen können.

In einer Ausführungsform werden mit dem erfindungsmäßigen Verfahren thermoplastische Formmassen erzeugt, die durch einen 1-Buten-Gehalt von weniger als 50 ppm, bevorzugt weniger als 20 ppm bezüglich der Gesamtmasse der thermoplastischen Formmasse charakterisiert sind.

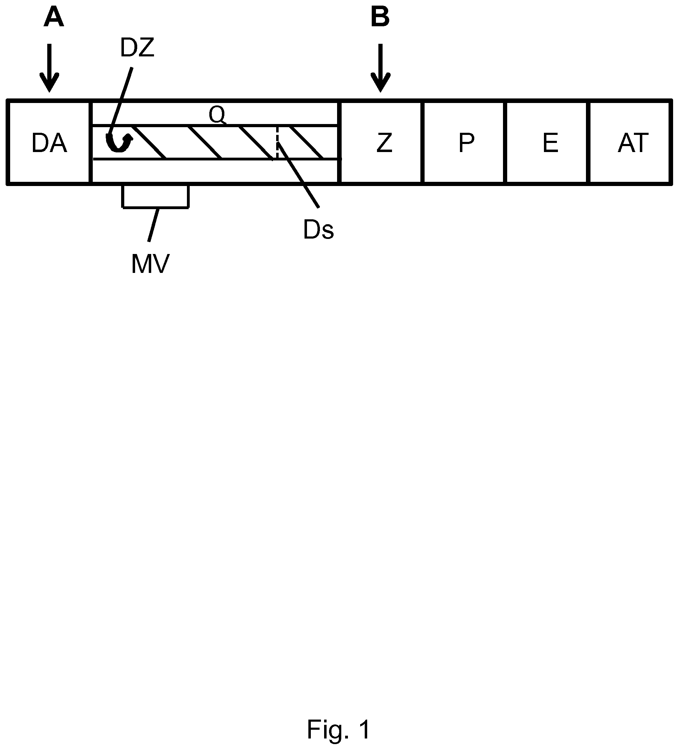

In einer bevorzugten Ausführungsform enthält die mit dem erfindungsgemäßen Verfahren erzeugte thermoplastische Formmasse ein Butylacrylat-Styrol-Acrylnitril-Copolymer sowie ein SAN-Copolymer und gegebenenfalls weitere Komponenten und ist charakterisiert durch einen 1-Buten-Gehalt von weniger als 20 ppm, bevorzugt weniger als 10 ppm bezüglich der Gesamtmasse der thermoplastischen Formmasse.
Mit dem erfindungsgemäßen Verfahren können thermoplastische Formmassen, die insbesondere ein Butylacrylat-Styrol-Acrylnitril-Copolymer sowie ein SAN-Copolymer und gegebenenfalls weitere Komponenten enthalten, hergestellt werden, die einen 1-Buten-Gehalt von weniger als 50 ppm, bevorzugt weniger als 20 ppm und insbesondere bevorzugt weniger als 10 ppm bezüglich der Gesamtmasse der thermoplastischen Formmasse aufweisen. Darüber hinaus weisen thermoplastische Formmassen, welche gemäß der Erfindung erzeugt wurden, im Allgemeinen einen geringen Gehalt an Restmonomeren und Abbauprodukten auf. So beträgt beispielsweise der Gehalt an Styrol typischerweise weniger als 39 ppm, bevorzugt weniger als 25 ppm und insbesondere bevorzugt weniger als 20 ppm bezüglich der Gesamtmasse der thermoplastischen Formmasse. Die Erfindung wird mit Hilfe einer Abbildung (Fig. 1) illustriert, welche ein Beispiel einer Ausführungsform zeigt und keine Einschränkung für weitere mögliche Ausführungsformen darstellt.
Die Abbildung Fig. 1 zeigt eine schematische Darstellung des Extruders. Fig. 1 zeigt die Anordnung des Dosierabschnitts (DA), des Abquetschabschnitts (Q), des Zuführabschnitts (Z), des Plastifizierungsabschnitts (P), des Entgasungsabschnitts (E) und der Austragszone (AT) im Extruder, welcher zur mechanischen Entwässerung des Elastomers A und zur Vermischung mit dem Thermoplasten B eingesetzt wird. A wird in (DA) zugegeben, während B in (Z) zugeführt wird. Der Schneckenextruder im Abquetschabschnitt (Q) weist den Aussendurchmesser (Ds) einer Schnecke sowie die Schneckendrehzahl (DZ) auf. Darüber hinaus ist im Abquetschabschnitt (Q) eine Metalldrahtgewebe-Verbundplatte (MV) eingebaut.
Die Erfindung wird durch die Beispiele und die Ansprüche weiter erläutert. Vergleichsbeispiel und Beispiel

Im Vergleichsbeispiel und Beispiel wird der resultierende Gehalt an Abbauprodukten im Produkt bei hoher und niedriger Drehzahl (DZ) der Extruderschnecke sowie ohne und mit Einsatz einer Metalldrahtgewebe-Verbundplatte (MV) im Abquetschabschnitt (Q) gegenübergestellt.

| | Vergleichsbeispiel | Beispiel |
|---|---|---|
| Extruder | ZSK133 mit Ds = 133 mm | ZSK133 mit Ds = 133 mm |
| Zone DA Dosierabschnitt | Förderelemente | Förderelemente |
| Zone Q1 Abquetschabschnitt | Stauelemente/Förderelement + Rückhalteschnecke | Stauelemente/Förderelemente + Rückhalteschnecke |
| Zone Q2 Abquetschabschnitt | Stauelemente/Förderelement + Rückhalteschnecke | Stauelemente / Förderelement + Metalldrahtgewebe-Verbundplatte |
| Zone Z SAN-Zuführung | Mischelemente | Mischelemente |
| U/min in Q2 | 270 | 160 |
| Druck in Q2 | 57 bar | 32 bar |
| Durchsatz Kautschuk* | 1,1 t/h | 1,1 t/h |
| Durchsatz SAN Polymer* | 1,1 t/h | 1,1 t/h |
| Abbauprodukte im konfektionierten ASA-Polymer in 1-Buten (ppm) Rest-Styrol (ppm) | 51 | 6 |
| | 39 | 16 |

| | | |
|---|---|---|
| *ASA-Kautschuk und SAN-Polymer wie in EP-A 1 400 337 beschrieben; Kautschuk-Menge bezogen auf Trockenkautschuk | | |

Die im Beispiel im Abquetschabschnitt Q2 eingesetzte Metalldrahtgewebe-Verbundplatte (MV) weist eine Maschenweite von 75 µm auf. Zur Bestimmung des Gehaltes an 1-Buten im konfektionierten ASA-Polymer wurden 0,5 g einer Probe in eine 22 ml Headspace-Ampulle eingewogen. Die Probe wird bei 80°C für 3 Stunden getempert. Anschließend werden die flüchtigen Bestandteile durch Headspace-GC-Analyse quantifiziert.

Durch den gezielten Einsatz einer Metalldrahtgewebe-Verbundplatte (MV) und die Reduktion der Schneckendrehzahl (DZ) von 270 auf 160 U/min konnten die Formmassen schonender verarbeitet werden. Dies ist unter anderem auch am Gehalt von Abbauprodukten in der thermoplastischen Formmasse ablesbar. Im Beispiel werden der unerwünschte Gehalt an dem Abbauprodukt 1-Buten von 51 ppm auf 6 ppm und der Gehalt an Restmonomer Styrol von 39 ppm auf 16 ppm reduziert.

Die erhaltenen thermoplastischen Formmassen bzw. Zusammensetzungen lassen sich besser verarbeiten und führen zu hochwertigeren Formkörpern.

## Patentansprüche

1. Verfahren zur Herstellung von thermoplastischen Formmassen, bei dem ein Extruder eingesetzt wird, welcher, in Förderrichtung stromabwärts aufgebaut ist aus:
a) mindestens einem Dosierabschnitt (DA), wobei dieser Dosierabschnitt (DA) vorzugsweise mindestens eine Entwässerungsöffnung umfasst, die mit einer Metalldrahtgewebe-Verbundplatte (MV), einem Feinlochblech oder einer Schlitzlochblende ausgerüstet ist,
b) mindestens einem der Entwässerung der thermoplastischen Formmasse dienenden Abquetsch-Abschnitt (Q), der mindestens ein Stauelement, sowie jeweils mindestens eine zugehörige Entwässerungsöffnung enthält, wobei diese mindestens eine Entwässerungsöffnung mit einer Metalldrahtgewebe-Verbundplatte (MV), einem Feinlochblech oder einer Schlitzlochblende ausgerüstet ist,
c) mindestens einem Zuführabschnitt (Z),
d) mindestens einem, mit Durchmischungs-, Knet- und/oder anderen PlastifizierungsElementen versehenen Plastifizierungs-Abschnitt (P),
e) mindestens einem, mit mindestens einer Entgasungsöffnung versehenen Entgasungsabschnitt (E), wobei mindestens eine der Entgasungsöffnungen vorzugsweise mit einer Metalldrahtgewebe-Verbundplatte (MV), einem Feinlochblech oder einer Schlitzlochblende ausgerüstet ist, und
f) einer Austragszone (AT),
wobei bei dem Verfahren im Abquetsch-Abschnitt (Q) ein Schneckenextruder (S) eingesetzt wird, in dem der Außendurchmesser (Ds) mindestens einer Schnecke von 30 mm bis 230 mm, insbesondere von 60 mm bis 220 mm beträgt, und
wobei eine Drehzahl (DZ) der mindestens einen Schnecke des Extruders von 60 bis 270, insbesondere von 60 bis 210 U/min beträgt, und wobei
der eingesetzte Schneckenextruder (S) mindestens eine Entgasungsöffnung und/oder Entwässerungsöffnung aufweist, wobei in der Entwässerungsöffnung mindestens eine Metalldrahtgewebe-Verbundplatte (MV) befestigt ist, mit zwei oder mehreren Lagen, wobei sich auf einer grob gewebten, großmaschigen aber mechanisch stabilen Trägerschicht (erste Lage) mindestens eine engmaschigere Lage befindet, wobei sich die engmaschigste Lage auf einer produktzugewandten Seiten befindet, wobei
in den Dosierabschnitt (DA) mittels einer Dosiereinrichtung eine Wasser- und/oder eine andere verdampfbare Flüssigkeit enthaltende thermoplastische Formmasse dem Extruder zugeführt wird, welche
mindestens ein Kautschuk-modifiziertes Styrol-Acrylnitril(SAN)-Copolymer enthält, mit mindestens einem Acrylester-Styrol-Acrylnitril (ASA) Kautschuk mit einer bimodalen Teilchengrößenverteilung und einer mittleren Teilchengröße von 80 nm bis 600 nm, bevorzugt von 200 nm bis 600 nm, sowie einer SAN-Matrix mit einem AN-Gehalt von 25 Gew.-% bis 35 Gew.-%, bevorzugt 27 Gew.-% bis 33 Gew.-%, und
in dem Zuführabschnitt (Z) weitere Komponenten der thermoplastischen Formmasse als Schmelze in den Extruder eingeführt werden, und
in dem Entgasungsabschnitt (E) aus der thermoplastischen Formmasse weiteres Wasser beziehungsweise Flüssigkeiten als Dampf entfernt werden, und
in der Austragszone (AT) die thermoplastische Formmasse aus dem Extruder ausgetragen wird.

2. Verfahren nach Anspruch 1, **dadurch gekennzeichnet, dass** die thermoplastische Formmasse mindestens ein schlagzäh-modifiziertes Copolymer oder einen schlagzäh-modifizierten Copolymer-Blend sowie gegebenenfalls weitere Komponenten enthält.

3. Verfahren nach mindestens einem der Ansprüch 1 bis 2, **dadurch gekennzeichnet, dass** die thermoplastische Formmasse mindestens ein Kautschuk-modifiziertes Styrol-Acrylnitril-Copolymer enthält, wobei eine Kautschuk-Komponente auf einem Acrylester-Styrol-Acrylnitril-Copolymer oder auf einem Polybutadien basiert.

4. Verfahren nach mindestens einem der Ansprüche 1 bis 3, **dadurch gekennzeichnet, dass** im Verfahren als mindestens ein Schritt eine Entgasung und/oder eine mechanische Entwässerung umfasst ist, wobei das austretende Wasser teilweise oder vollständig in flüssiger Phase abgeführt wird.

5. Verfahren nach mindestens einem der Ansprüche 1 bis 4, **dadurch gekennzeichnet, dass** die thermoplastische Formmasse aus einer wasserfeuchten, bis zu 90 Gew.-% Restwasser enthaltenden Komponente herstellt wird und mit den weiteren Komponenten unter Entgasung und/oder Entwässerung vermischt und anschließend die thermoplastische Formmasse aus dem Extruder ausgetragen wird.

6. Verfahren nach mindestens einem der Ansprüche 1 oder 5, **dadurch gekennzeichnet, dass** der Außendurchmesser (Ds) mindestens einer Schnecke des Schneckenextruders (S) zwischen 80 mm und 180 mm beträgt.

7. Verfahren nach mindestens einem der Ansprüche 1 bis 6, **dadurch gekennzeichnet, dass** die Drehzahl (DZ) der mindestens einen Schnecke des Schneckenextruders (S) zwischen 100 U/min und 200 U/min beträgt.

8. Verfahren nach mindestens einem der Ansprüche 1 bis 7, **dadurch gekennzeichnet, dass** ein Druck im Abquetsch-Abschnitt (Q) des Schneckenextruders von 10 bar bis 55 bar, insbesondere von 15 bar bis 35 bar beträgt.

9. Verfahren nach mindestens einem der Ansprüche 1 bis 8, **dadurch gekennzeichnet, dass** der Schneckenextruder (S) mit mindestens zwei gleichsinnig oder gegensinnig rotierenden Schnecken mit einem Außendurchmesser (Ds) von 30 mm bis 230 mm, insbesondere von 60 mm bis 220 mm, ausgerüstet ist.

10. Verfahren nach mindestens einem der Ansprüche 1 bis 9, **dadurch gekennzeichnet, dass** die Metalldrahtgewebe-Verbundplatte 2 bis 30 Lagen, insbesondere 3 bis 15 Lagen aufweist.

11. Verfahren nach mindestens einem der Ansprüche 1 bis 10, **dadurch gekennzeichnet, dass** eine mittlere Maschenweite der engmaschigsten Lage der Metalldrahtgewebe-Verbundplatte (MV) von 1 µm bis 500 µm, bevorzugt 10 µm bis 200 µm beträgt.

12. Thermoplastische Formmasse hergestellt in einem Extruder nach einem Verfahren gemäß einem der Ansprüche 1 bis 11, welche
mindestens ein Kautschuk-modifiziertes Styrol-Acrylnitril(SAN)-Copolymer enthält, mit mindestens einem Acrylester-Styrol-Acrylnitril (ASA) Kautschuk mit einer bimodalen Teilchengrößenverteilung und einer mittleren Teilchengröße von 80 nm bis 600 nm, bevorzugt von 200 nm bis 600 nm, sowie einer SAN-Matrix mit einem AN-Gehalt von 25 Gew.-% bis 35 Gew.-%, bevorzugt 27 Gew.-% bis 33 Gew.-%.

13. Thermoplastische Formmasse gemäß Anspruch 12, charakterisiert durch einen 1-Buten-Gehalt von weniger als 50 ppm, bezüglich der Gesamtmasse der thermoplastischen Formmasse.

14. Thermoplastische Formmasse gemäß Anspruch 12 oder 13, enthaltend ein Butylacrylat-Styrol-Acrylnitril-Copolymer sowie ein SAN-Copolymer, charakterisiert durch einen 1-Buten-Gehalt von weniger als 20 ppm.

## Claims

1. A process for the production of thermoplastic molding compositions, where an extruder is used which is composed of the following, in the direction of conveying:
a) at least one feed zone (DA), where said feed zone (DA) preferably comprises at least one dewatering aperture equipped with a metal-wire-mesh composite sheet (MV), a finely perforated metal sheet, or a slit diaphragm,
b) at least one squeeze zone (Q) which serves to dewater the thermoplastic molding composition, which comprises at least one baffle, and which also comprises in each case at least one associated dewatering aperture, said at least one dewatering aperture being equipped with a metal-wire-mesh composite sheet (MV), a finely perforated metal sheet, or a slit diaphragm,
c) at least one input zone (Z),
d) at least one plastifying zone (P) provided with mixing, kneading, and/or other plastifying elements,
e) at least one vent zone (E) which has at least one vent, where at least one of the vents is preferably equipped with a metal-wire-mesh composite sheet (MV), a finely perforated metal sheet, or a slit diaphragm, and
f) a metering zone (AT),
where the squeeze zone (Q) in the process uses a screw-based extruder (S) in which the outer diameter (Ds) of at least one screw is from 30 mm to 230 mm, in particular from 60 mm to 220 mm, and
where the rotation rate (DZ) of the at least one screw of the extruder is from 60 to 270, in particular 60 to 210 rpm, and where
the screw-based extruder (S) used has at least one vent and/or dewatering aperture where there is, secured in the dewatering aperture, at least one metal-wire-mesh composite sheet (MV) with two or more layers, there being at least one smaller-mesh layer present on a coarsely woven, large-mesh but mechanically stable backing layer (first layer), where the location of the layer having the smallest mesh is on a side facing toward the product, wherein
in the at least one feed zone (DA) a thermoplastic molding composition comprising water and/or comprising another vaporizable liquid is introduced by means of feed equipment into the extruder, the thermoplastic molding composition comprises at least one rubber-modified styrene-acrylonitrile (SAN) copolymer, with at least one acrylate-styrene-acrylonitrile (ASA) rubber with bimodal particle size distribution and average particle size from 80 nm to 600 nm, preferably from 200 nm to 600 nm, and also with an SAN matrix with AN content from 25% by weight to 35% by weight, preferably from 27% by weight to 33% by weight, and
in the input zone (Z) other components of the thermoplastic molding composition in the form of melt are introduced into the extruder, and
in the vent zone (E) further water or liquids are removed from the thermoplastic molding composition as vapor, and
in the metering zone (AT) the thermoplastic molding composition is discharged from the extruder.

2. The process as claimed in claim 1, **characterized in that** the thermoplastic molding composition comprises at least one impact-modified copolymer or one impact-modified copolymer blend, and also optionally other components.

3. The process as claimed in at least one of claims 1 to 2, **characterized in that** the thermoplastic molding composition comprises at least one rubber-modified styrene-acrylonitrile copolymer, where a rubber component is based on an acrylate-styrene-acrylonitrile copolymer or on a polybutadiene.

4. The process as claimed in at least one of claims 1 to 3, **characterized in that** the process comprises, as at least one step, devolatilization and/or mechanical dewatering, where the water that emerges is partly or entirely removed in the liquid phase.

5. The process as claimed in at least one of claims 1 to 4, **characterized in that** the thermoplastic molding composition is produced from a water comprising component, comprising up to 90% by weight of residual water, and said component is mixed with the other components under devolatilization and/or dewatering, and then the thermoplastic molding composition is discharged from the extruder.

6. The process as claimed in at least one of claims 1 or 5, **characterized in that** the outer diameter (Ds) of at least one screw of the screw-based extruder (S) is from 80 mm to 180 mm.

7. The process as claimed in at least one of claims 1 to 6, **characterized in that** the rotation rate (DZ) of the at least one screw of the screw-based extruder (S) is from 100 rpm to 200 rpm.

8. The process as claimed in at least one of claims 1 to 7, **characterized in that** the pressure in the squeeze zone (Q) of the screw-based extruder is from 10 bar to 55 bar, in particular 15 bar to 35 bar.

9. The process as claimed in at least one of claims 1 to 8, **characterized in that** the screw-based extruder (S) is equipped with at least two co- or contrarotating screws with outer diameter (Ds) from 30 mm to 230 mm, in particular from 60 mm to 220 mm.

10. The process as claimed in at least one of claims 1 to 9, **characterized in that** the metal-wire-mesh composite sheet has 2 to 30 layers, in particular 3 to 15 layers.

11. The process as claimed in at least one of claims 1 to 10, **characterized in that** the average mesh width of the smallest-mesh layer of the metal-wire-mesh composite sheet (MV) is from 1 µm to 500 µm, preferably 10 µm to 200 µm.

12. A thermoplastic molding composition produced in an extruder by a process as claimed in any of claims 1 to 11, which comprises at least one rubber-modified styrene-acrylonitrile (SAN) copolymer, with at least one acrylate-styrene-acrylonitrile (ASA) rubber with bimodal particle size distribution and average particle size from 80 nm to 600 nm, preferably from 200 nm to 600 nm, and also with an SAN matrix with AN content from 25% by weight to 35% by weight, preferably from 27% by weight to 33% by weight

13. The thermoplastic molding composition as claimed in claim 12, **characterized by** less than 50 ppm content of 1-butene, based on the total mass of the thermoplastic molding composition.

14. The thermoplastic molding composition as claimed in claim 12 or 13, comprising a butyl acrylate-styrene-acrylonitrile copolymer, and also an SAN copolymer, **characterized by** less than 20 ppm content of 1-butene.

## Revendications

1. Procédé de fabrication de mélanges à mouler thermoplastiques, dans lequel on utilise une extrudeuse qui, dans la direction de l'avance vers l'aval, est constituée
a) d'un segment doseur (DA), ce segment doseur (DA) comprenant de préférence au moins un orifice de drainage, qui est pourvu d'une plaque composite d'un tamis métallique (MV), d'une tôle perforée à petits trous ou d'un diaphragme à fente,
b) d'au moins un segment exprimeur (Q), servant au drainage du mélange à mouler thermoplastique, qui contient au moins un élément de retenue, ainsi que, pour chacun, au moins un orifice de drainage correspondant, cet au moins un orifice de drainage étant pourvu d'une plaque composite d'un tamis métallique (MV), d'une tôle perforée à petits trous ou d'un diaphragme à fente,
c) d'au moins un segment d'alimentation (Z),
d) d'au moins un segment de plastification (P), pourvue d'éléments de mélange, d'éléments malaxeurs et/ou d'autres éléments de plastification,
e) d'au moins un segment de dégazage (E), pourvu d'au moins un orifice de dégazage, au moins l'un des orifices de dégazage étant de préférence pourvu d'une plaque composite d'un tamis métallique (MV), d'une tôle perforée à petits trous ou d'un diaphragme à fente, et
f) d'une zone de décharge (AT),
procédé dans lequel, dans le segment exprimeur (Q), on utilise une extrudeuse à vis (S), dans laquelle le diamètre extérieur (Ds) d'au moins une vis est de 30 mm à 230 mm, en particulier de 60 mm à 220 mm, et
dans lequel une vitesse de rotation (DZ) de l'au moins une vis de l'extrudeuse est de 60 à 270, en particulier de 60 à 210 tr/min, et dans lequel
l'extrudeuse à vis utilisée (S) présente au moins un orifice de dégazage et/ou un orifice de drainage, au moins une plaque composite d'un tamis métallique (MV) étant fixée dans l'orifice de drainage, avec deux couches ou plus, au moins une couche à petites mailles se trouvant sur une couche support (première couche), à tissage grossier, à grosses mailles, mais mécaniquement stable, la couche ayant les mailles les plus petites se trouvant sur un côté dirigé vers le produit,
un mélange à mouler thermoplastique, contenant de l'eau et/ou un autre liquide évaporable, étant, dans le segment doseur (DA), et à l'aide d'un dispositif doseur, amené à l'extrudeuse,
mélange à mouler qui contient au moins un copolymère styrène-acrylonitrile (SAN) modifié par un caoutchouc, avec au moins un caoutchouc ester acrylique-styrène-acrylonitrile (ASA) présentant une distribution granulométrique bimodale et une granulométrie moyenne de 80 nm à 600 nm, de préférence de 200 nm à 600 nm, ainsi qu'une matrice SAN ayant une teneur en AN de 25 % en poids à 35 % en poids, de préférence de 27 % en poids à 33 % en poids, et
dans le segment d'alimentation (Z), des composants supplémentaires du mélange à mouler thermoplastique sont introduits dans l'extrudeuse sous forme d'une masse fondue, et
dans le segment de dégazage (E), on élimine sous forme de vapeur, à partir du mélange à mouler thermoplastique, l'eau ou les liquides supplémentaires, et
dans la zone de décharge (AT), on évacue de l'extrudeuse le mélange à mouler thermoplastique.

2. Procédé selon la revendication 1, **caractérisé en ce que** le mélange à mouler thermoplastique contient un copolymère modifié choc ou un mélange de copolymères modifié choc, ainsi qu'éventuellement des composants supplémentaires.

3. Procédé selon au moins l'une des revendications 1 à 2, **caractérisé en ce que** le mélange à mouler thermoplastique contient au moins un copolymère styrène-acrylonitrile modifié par un caoutchouc, un composant caoutchouc étant à base d'un copolymère ester acrylique-styrène-acrylonitrile ou d'un polybutadiène.

4. Procédé selon au moins l'une des revendications 1 à 3, **caractérisé en ce que**, dans le procédé, il comprend en tant qu'au moins une étape un dégazage et/ou un drainage mécanique, l'eau qui s'échappe étant en totalité ou en partie évacuée en phase liquide.

5. Procédé selon au moins l'une des revendications 1 à 4, **caractérisé en ce que** le mélange à mouler thermoplastique est fabriqué à partir d'un composant humide, contenant jusqu'à 90 % en poids d'eau résiduelle, et est mélangé aux composants supplémentaires, avec dégazage et/ou drainage, puis le mélange à mouler thermoplastique est évacué de l'extrudeuse.

6. Procédé selon au moins l'une des revendications 1 ou 5, **caractérisé en ce que** le diamètre extérieur (Ds) d'au moins une vis de l'extrudeuse à vis (S) est compris entre 80 mm et 180 mm.

7. Procédé selon au moins l'une des revendications 1 à 6, **caractérisé en ce que** la vitesse de rotation (DZ) de l'au moins une vis de l'extrudeuse à vis (S) est comprise entre 100 tr/min et 200 tr/min.

8. Procédé selon au moins l'une des revendications 1 à 7, **caractérisé en ce qu'**une pression, dans le segment exprimeur (Q) de l'extrudeuse à vis, est de 10 bar à 55 bar, en particulier de 15 bar à 35 bar.

9. Procédé selon au moins l'une des revendications 1 à 8, **caractérisé en ce que** l'extrudeuse à vis (S) est pourvue d'au moins deux vis tournant dans le même sens ou en sens contraire, ayant un diamètre extérieur (DS) de 30 mm à 230 mm, en particulier de 60 mm à 220 mm.

10. Procédé selon au moins l'une des revendications 1 à 9, **caractérisé en ce que** la plaque composite d'un tamis métallique présente 2 à 30 couches, en particulier 3 à 15 couches.

11. Procédé selon au moins l'une des revendications 1 à 10, **caractérisé en ce qu'**une ouverture moyenne de maille de la couche à petites mailles de la plaque composite d'un tamis métallique (MV) est de 1 µm à 500 µm, de préférence de 10 µm à 200 µm.

12. Mélange à mouler thermoplastique fabriqué dans une extrudeuse par un procédé selon l'une des revendications 1 à 11, qui contient
au moins un copolymère styrène-acrylonitrile (SAN) modifié par un caoutchouc, avec au moins un caoutchouc ester acrylique-styrène-acrylonitrile présentant une distribution granulométrique bimodale et une granulométrie moyenne de 80 nm à 600 nm, de préférence de 200 nm à 600 nm, ainsi qu'une matrice SAN ayant une teneur en AN de 25 % en poids à 35 % en poids, de préférence de 27 % en poids à 33 % en poids.

13. Mélange à mouler thermoplastique selon la revendication 12, **caractérisé par** une teneur en 1-butène inférieure à 50 ppm, par rapport à la masse totale du mélange à mouler thermoplastique.

14. Mélange à mouler thermoplastique selon la revendication 12 ou 13, contenant un copolymère acrylate de butyle-styrène-acrylonitrile, ainsi qu'un copolymère SAN, **caractérisé par** une teneur en 1-butène inférieure à 20 ppm.
